# EUROPÄISCHE PATENTSCHRIFT

(11) **EP 3 101 613 B1**
(45) Veröffentlichungstag und Bekanntmachung des Hinweises auf die Patenterteilung: **24.07.2019**
(21) Anmeldenummer: 15170555.5
(22) Anmeldetag: 03.06.2015
(51) Int. Cl.: G06Q 30/06

(54) **AUTONOMES ELEKTRONISCHES PREISSCHILD**
AUTONOMOUS ELECTRONIC PRICE LABEL
ÉTIQUETTE DE PRIX AUTONOME ÉLECTRONIQUE

(43) Veröffentlichungstag der Anmeldung: 07.12.2016
(73) Patentinhaber: Müller, Bernd, 35625 Hüttenberg (DE)
(72) Erfinder: Müller, Bernd, 35625 Hüttenberg (DE)
(74) Vertreter: Metten, Karl-Heinz

(56) Entgegenhaltungen:
- EP-A1- 2 204 767
- EP-A1- 2 833 306
- EP-A2- 0 798 643
- US-A1- 2014 372 254

## Beschreibung

Die vorliegende Erfindung betrifft ein Verfahren zum Senden und Empfangen von produktbezogenen Daten mit einem autonomen elektronischen Preisschild sowie ein autonomes elektronisches Preisschild zu Anwendung des Verfahrens. Ferner betrifft die Erfindung ein Fahrzeug mit einem solchen Preisschild.

Elektronische Preisschilder sind grundsätzlich aus dem Stand der Technik bekannt.

In der EP 0749092 B1 wird ein elektronisches Preisschild offenbart, welches Daten empfangen und versenden kann.

Die DE 202008007287 U1 betrifft das Problem, dass elektronische Preisschilder üblicherweise über Kabel bzw. Batterien mit Strom versorgt werden müssen. Die Lösung besteht in Kontakten zur direkten oder indirekten Abnahme des auf den stromleitfähigen Beschichtungen des Trägermaterials geführten Stroms.

Ferner sind Preisschilder mit e-Ink-Displays bekannt, welche aktualisiert werden können, um aktuelle Preise anzuzeigen.

Die US 2014/0372254 A1 beschreibt ein elektronisches Preisschild, welches in Kommunikation mit einem Server steht und artikelrelevante Informationen, wie das Datum ausgeben kann, sowie eine zugehörige Sende-/Empfangseinheit, die drahtlos Daten an ein Endgerät eines Kunden übertragen kann.

Obgleich elektronische Preisschilder schon seit langem bekannt sind, werden diese meist nur zur einfachen Kennzeichnung von Waren mit häufig wechselnden Preisen genutzt.

Der vorliegenden Erfindung liegt die Aufgabe zugrunde, ein Verfahren mit einem elektronischen Preisschild und zugehöriges elektronisches Preisschild bereitzustellen, welches unabhängig von externen Stromquellen aufgestellt werden kann und gleichzeitig dem Kunden aktualisierte Informationen, insbesondere einen aktuellen Preis, drahtlos zukommen lässt.

Gelöst wird die Aufgabe durch ein Verfahren, umfassend die nachfolgenden Schritte, insbesondere in dieser Reihenfolge,
a) vorzugsweise das, insbesondere regelmäßige, Abrufen und/oder Berechnen eines ersten produktbezogenen Datums, insbesondere eines aktuellen Produktpreises, durch den Server,
b) das drahtlose Bereitstellen, insbesondere Versenden, von mindestens einem ersten und/oder zweiten produktbezogenen Datum, insbesondere einschließlich eines aktuellen Produktpreises, insbesondere durch einen Server,
c) das Empfangen und Speichern des mindestens einen ersten und/oder zweiten produktbezogenen Datums durch ein autonomes elektronisches Preisschild, wobei dieses eine erste Datenübertragungseinrichtung zum Empfangen des mindestens einen ersten und/oder zweiten produktbezogenen Datums und mindestens eine Speichereinheit zum Speichern des mindestens einen ersten und/oder zweiten produktbezogenen Datums aufweist,
d) das Anzeigen des mindestens einen ersten und/oder zweiten produktbezogenen Datums durch das autonome elektronische Preisschild, wobei das autonome elektronische Preisschild ein Display zum Anzeigen des mindestens einen produktbezogenen Datums und mindestens einen Energiespeicher, welcher das Display mit Energie versorgt, aufweist,
e) vorzugsweise das Senden eines kundenbezogenen Datums von einem mobilen Endgerät zu dem autonomen elektronischen Preisschild, sowie das Empfangen des kundenbezogenen Datums, insbesondere durch die zweite Datenübertragungseinrichtung,
f) vorzugsweise das Auswerten des kundenbezogenen Datums durch eine Datenverarbeitungseinrichtung des autonomen elektronischen Preisschilds,
g) das Senden des mindestens einen ersten und/oder zweiten produktbezogenen Datums zu einem mobilen Endgerät, insbesondere Smartphone, wobei das autonome elektronische Preisschild eine zweite Datenübertragungseinrichtung zum Senden des besagten mindestens einen ersten und/oder zweiten produktbezogenen Datums aufweist,
wobei das autonome elektronische Preisschild eine erste Positionserfassungseinrichtung umfasst, durch welche die erste Ist-Position des autonomen elektronischen Preisschilds feststellbar ist, wobei die mindestens eine Speichereinheit eine Soll-Position des autonomen elektronischen Preisschilds umfasst, wobei das autonome elektronische Preisschild über die erste und/oder zweite Datenübertragungseinheit ein Signal abgibt, wenn das autonome elektronische Preisschild, insbesondere eine Datenverarbeitungseinrichtung des autonomen elektronischen Preisschilds, mittels der ersten Positionserfassungseinrichtung feststellt, dass die erste Ist-Position nicht mit der Soll-Position übereinstimmt, wobei die erste Positionserfassungseinrichtung ein GPS-Modul ist.

Ein autonomes elektronisches Preisschild im Sinne der vorliegenden Erfindung ist ein elektronisches Preisschild, das während des Betriebs keine Verbindung durch Kabel zur Daten- oder Stromversorgung benötigt. Dies hat den Vorteil, dass das autonome elektronische Preisschild unabhängig von den lokalen Versorgungsstrukturen (Steckdose, LAN-Kabel, etc.) aufgestellt werden kann. Dies schließt allerdings nicht aus, dass eine Anbindung an ein Kabel während des Betriebs grundsätzlich möglich ist. Eine Grundbedingung für autonome elektronische Preisschilder ist, dass diese über einen gewissen, insbesondere längeren, Zeitraum ihren Energiebedarf über eine eigene Energieversorgung, insbesondere eine Batterie oder einen Akku, abdecken können. Zu diesem Zweck umfasst das erfindungsgemäße Preisschild mindestens einen Energiespeicher. Der mindestens eine Energiespeicher sollte dabei vorzugsweise hinreichend kompakt sein, um in einem Gehäuse des Preisschilds untergebracht werden zu können. Der längere Zeitraum beträgt dabei vorzugsweise mindestens einige Tage (> 6 Tage), insbesondere einige Monate, beispielsweise mindestens drei oder mindestens sechs Monate, vorzugsweise mehrere Jahre, insbesondere mindestens 2 Jahre. Wenn in dem vorliegenden Dokument in Verbindung mit der Erfindung von dem Preisschild gesprochen wird, betrifft dies das autonome elektronische Preisschild.

In einer bevorzugten Ausgestaltung des vorstehend genannten Verfahrens wird in Schritt d) das erste produktbezogene Datum angezeigt und in Schritt g) das zweite produktbezogene Datum übertragen. Beispielsweise kann als erstes produktbezogenes Datum eine Preisinformation, insbesondere der aktuelle Produktpreis, von dem Server an das Preisschild in Schritt d) übertragen werden und in Schritt g) wird als zweites produktbezogenes Datum eine Orts- oder Richtungsinformation von dem Preisschild an ein mobiles Endgerät übertragen. Ferner kann auch in Schritt d) und g) jeweils das erste produktbezogene Datum übertragen werden. Beispielsweise kann als erstes produktbezogenes Datum eine Preisinformation an das Preisschild übertragen werden und dieselbe Preisinformation wiederrum von dem Preisschild an ein mobiles Endgerät. Letzteres hat den erheblichen Vorteil, dass die Information des Preisschilds (erstes produktbezogenes Datum) mit der Information, welche an das mobile Endgerät übertragen wird, übereinstimmt. Hierdurch wird verhindert, dass ein Kunde von einem Server ggf. produktbezogene Daten erhält, welche möglicherweise von dem Preisschild abweichen. Beispielsweise wäre es unerfreulich, wenn ein Preisschild eine Preiserhöhung noch nicht mitgeteilt bekäme, diese jedoch bereits durch den Server an die mobilen Endgeräte von Kunden weitervermittelt werden. Durch das vorstehende Verfahren wird also bereits aufgrund der Kommunikationsstruktur unterbunden, dass Abweichungen zwischen den auf dem Preisschild angezeigten und an mobile Endgeräte übermittelten Daten entstehen können. Überraschenderweise hat sich gezeigt, dass durch die Nutzung vergleichsweise einfacher elektronischer Gerätschaften, insbesondere in Verbindung mit dem elektronischen Preisschild, ein hoher Grad an Sicherheit erreicht wird.

In einer bevorzugten Ausgestaltung umfasst das Display eine nichtleuchtende Anzeige. Hierbei kann es sich insbesondere um ein e-Ink-Display oder ein LCD-Display ohne Hintergrundbeleuchtung handeln. Es hat sich gezeigt, dass solche Displays sich besonders gut für das erfindungsgemäße elektronische Preisschild einsetzten lassen. Da Produkte meist tagsüber verkauft werden, ist es ggf. nicht nötig das Preisschild zu beleuchten. Auch kann hierdurch eine Batterie von geringerer Kapazität eingesetzt oder eine höhere Laufzeit erreicht werden. Ferner ist es bei solchen Display nicht immer auf den ersten Blick ersichtlich, dass diese elektronisch sind. Somit wird die Aufmerksamkeit des Käufers auch nicht von der eigentlich angezeigten Information abgelenkt.

In einer zweckmäßigen Ausgestaltung ist es vorteilhaft, wenn die Darstellung durch das Anlegen einer Spannung verändert werden kann und anschließend für mindestens 48 h, insbesondere 200 h, stabil bleibt. Diese Stabilität wird erfindungsgemäß ohne das Anlegen einer Spannung, bei 25°C und 25% relativer Luftfeuchtigkeit gemessen. Hierdurch wird der mindestens eine Energiespeicher geschont. Besonders bedeutsam ist allerdings, dass selbst wenn der mindestens eine Energiespeicher entleert ist, also keinen Strom mehr liefern kann, die Information weiterhin angezeigt wird. Damit wird durch das Entleeren des mindestens einen Energiespeichers nur die Aktualisierung der Information unterbunden. Dies ist wichtig, da das Ausfallen von Preisschildern zu erheblichem Umsatzeinbußen führen kann. Somit ist das Merkmal aus Sicht eines Verkäufers auch sicherheitsrelevant.

In einer weiteren bevorzugten Ausgestaltung steht das autonome elektronische Preisschild, insbesondere drahtlos, mit einem Produkt und/oder einem dem Produkt zuordneten Alarmsystem in Verbindung, wobei ein Alarmsignal ausgelöst wird, wenn die Verbindung abbricht. Dies hat den Vorteil, dass festgestellt werden kann, ob das Preisschild absichtlich oder unabsichtlich an einem falschen Ort aufgestellt ist. Auch kann festgestellt werden, ob das Produkt ohne Autorisierung von dem Preisschild entfernt wird. In einer weiteren Ausgestaltung kann das Preisschild zusätzlich mit einem weiteren externen Alarmsystem oder dem Server in Verbindung stehen, wobei ein Alarmsignal ausgelöst wird, wenn die Verbindung abbricht. Das Alarmsignal kann ein akustisches Signal sein. Es kann sich allerdings auch um einen lautlosen Alarm handeln (beispielsweise durch eine entsprechende Anzeige auf einem Display oder durch eine drahtlos an den Server übermittelte Mitteilung).

In einer besonderes bevorzugten Ausgestaltung nimmt das autonome elektronische Preisschild, insbesondere drahtlos, mit einem Produkt und/oder einem dem Produkt zugeordneten Alarmsystem, insbesondere periodisch und/oder zu festgelegten Zeitpunkten, Kontakt auf oder wird von diesem kontaktiert, insbesondere drahtlos, wobei ein Alarmsignal versandt wird, wenn mindestens eine Kontaktaufnahme fehlschlägt. Wie vorstehend beschrieben kann es sich um ein lautloses oder akustisches Signal handeln. In einer bevorzugten Ausführung erfolgt die Kontaktaufnahme mindestens einmal alle 24 h und vorzugsweise nicht mehr als einmal stündlich.

In einer geeigneten Ausgestaltung umfasst das autonome elektronische Preisschild einen Bewegungssensor und/oder eine Kamera. Mit dem Bewegungssensor und/oder der Kamera ist es möglich, die Anwesenheit eines Nutzers in unmittelbarer Umgebung zum Preisschild zu detektieren. Dies kann beispielsweise dazu führen, dass das Preisschild eine Änderung der Anzeige vornimmt. In einer vorzugsweisen Ausgestaltung sendet das Preisschild ein kundenbezogenes Datum an den Server oder an ein zweites mobiles Endgerät, insbesondere mittels der ersten oder zweiten Datenübertragungseinrichtung, Beispielsweise kann das autonome elektronische Preisschild die Anwesenheit eines Kunden vor dem Produkt feststellen und an das Verkaufspersonal die Information (kundenbezogenes Datum) senden, dass ein Kunde vor dem Produkt steht und ggf. Beratung benötigt. Das Verkaufspersonal ist diesbezüglich mit einem Datenempfangsgerät ausgestattet und/oder erhält diese Information von dem Server. In einer Ausgestaltung ist es denkbar, dass der Bewegungssensor und/oder die Kamera erst nach Ablauf eines Zeitintervalls das kundenbezogene Datum versendet. Es sei darauf hingewiesen, dass ein Kunde im Sinne der vorliegenden Erfindung ein potentieller oder tatsächlicher Käufer ist. In diesem Sinne ist ein kundenbezogenes Datum eine Information über den potentiellen oder tatsächlichen Käufer. Diese Information ist vorzugsweise ausgewählt aus einer Gruppe von Informationen, umfassend den Aufenthaltsort des Kunden, ein Identifikationsmerkmal (z.B. Name des Kunden oder eine Kundennummer), eine ggf. anonymisierte Kundenkategorie (z.B. Stammkunde oder Neukunde) und eine ggf. anonymisierte verkaufsrelevante Information über den Kunden (z.B. Kreditwürdigkeit). Es ist bevorzugt, wenn das mindestens eine kundenbezogene Datum eine Information über den Aufenthaltsort des Nutzers und/oder eine Identifikationsinformation des Nutzers umfasst. Auch ist es denkbar, kundenspezifische Angebote für den Verkäufer basierend auf den Informationen über den Kunden zu erzeugen, insbesondere durch den Server und/oder das Preisschild. Dies können beispielsweise als erstes und/oder zweites produktbezogene Datum Nachlässe, Zugaben, Finanzierungsmöglichkeiten, Leasing-Angebote oder Garantien sein, welche auf den Kunden zugeschnitten sind.

Das mindestens eine erste und das mindestens eine zweite produktbezogene Datum kann grundsätzlich jegliche produktbezogene Information umfassen, insbesondere sein. In einer geeigneten Ausgestaltung ist das mindestens eine erste und das mindestens eine zweite produktbezogene Datum ausgewählt aus einer Gruppe umfassend: den Produktpreis, ein Zeitdatum, ein Nachlass, ein Leasing-Angebot, eine Garantie, eine Eigenschaft des Produkts (z.B. Baujahr, Zustand, Kilometerstand eines Fahrzeugs), ein Auftragsstatus (z.B. bereits verkauft), ein zu erfolgender Montageschritt, eine zu erreichende Soll-Position, eine Ist-Position, Reparaturinformationen (beispielsweise erfolgte Reparaturen, geplante Reparaturen, Umfang der Reparaturen), Unfallinformationen (z.B. Auffahrunfall eines Fahrzeugs, etc.), Zustandsinformationen (z.B. gebraucht oder neu, Füllstand eines Fahrzeugtanks). Vorzugsweise umfasst das erste produktbezogene Datum den Produktpreis.

Vorzugsweise umfasst die zweite Datenübertragungseinrichtung ein Bluetooth-Modul. Vorzugsweise ist die Sendeleistung kleiner 200 Milliwatt. Es ist vorteilhaft, wenn die Sendeleistung sogar kleiner 50 Milliwatt, insbesondere kleiner 20 Milliwatt und insbesondere bevorzugt kleiner 5 Milliwatt ist. Eine geringe Sendeleistung kann mehrere Vorteile haben. Einerseits wird der Stromverbrauch gesenkt, so dass die Dauer des autonomen Betriebs verlängert wird. Wichtiger ist jedoch, dass ein Bluetooth-Modul mit geringer Sendeleistung nur an Geräte in Reichweite der geringen Sendeleistung sendet. Während herkömmliche Geräte meist eine recht hohe Sendeleistung verwenden, hat sich überraschenderweise gezeigt, dass die betroffenen Kundenkreise in Umgebung des Produkts gezielter angesprochen werden können, indem eine geringere Sendeleistung verwendet wird. Die bewusste Limitierung hat zur Folge, dass nur Kunden bzw. deren mobile Endgeräte in Umgebung des Produktes Informationen zu dem Produkt empfangen. Auf diesem Wege kann also eine technisch einfache aber hocheffiziente Selektion der Produkte erfolgen, zu welchen der Kunde Informationen erhält. Sollten beispielsweise in einem Autokaufhaus 200 Autos grundsätzlich zu verkaufen sein, wäre es nicht förderlich, wenn der Kunde Information zu allen 200 Autos erhält, obgleich er sich nur in der Abteilung für Luxuswagen aufhält. Vielmehr wird der Kunde - ohne dass eine vergleichsweise aufwendige manuelle oder automatische Selektion stattfinden muss - nur Informationen zu den Autos in seiner Umgebung erhalten, insbesondere über das Auto mit Preisschild, vor welchem der Kunde gerade zum Stehen kommt. Es hat sich gezeigt, dass RFID-Transponder oder Bluetooth-Module, beispielsweise iBeacon-Module, auch aufgrund Ihrer bewusst begrenzbaren Sendeleitung hierfür besonders geeignet sind.

Vorzugsweise gibt das Bluetooth-Modul, insbesondere in regelmäßigen Zeitabständen, Signale von sich und kann insbesondere keine Daten drahtlos von dem mobilen Endgerät empfangen. Der Umstand, dass das Bluetooth-Modul von dem mobilen Endgerät keine Daten drahtlos empfangen kann, erhöht die Sicherheit erheblich (eine drahtlose Manipulation ist nicht möglich). Dies ist insbesondere in Verkaufseinrichtungen von Bedeutung. Ferner wird der Energiespeicher ggf. geschont.

In einer weiteren bevorzugten Ausgestaltung kann das Bluetooth-Modul Daten von dem mobilen Endgerät empfangen, wobei diese Daten insbesondere Nutzerinformationen oder Positionsinformationen umfassen.

In einer alternativen Ausgestaltung wird als zweite Datenübertragungseinrichtung ein aktiver oder passiver RFID-Transponder verwendet. Besagte RFID-Transponder, insbesondere passive RFID-Transponder, arbeiten stromsparend oder stromlos. Es hat sich überraschenderweise gezeigt, dass die begrenzte Reichweite in zahlreichen Anwendungsfeldern mit Vorteilen verbunden ist, wie sie auch in ähnlicher Form bei Bluetooth-Modulen vorliegen. Passive RFID-Transponder haben den erheblichen Vorteil, dass diese auch ohne aktive Stromversorgung funktionieren. Wenn also der Stromspeicher keinen Strom mehr aufweist, können immer noch Informationen an ein mobiles Endgerät übertragen werden. Gleichwohl kann die Reichweite für einige Anwendungszwecke zu gering sein.

In einer geeigneten Ausgestaltung umfasst die zweite Datenübertragungseinrichtung einen Sender, der, insbesondere in festen Zeitabständen und vorzugsweise alle 50 bis 1000 ms, Signale versendet, wobei die zweite Datenübertragungseinrichtung vorzugsweise nicht dafür ausgelegt und eingerichtet ist Daten zu empfangen und wobei die zweite Datenübertragungseinrichtung vorzugsweise mindestens 6 Monate, insbesondere 12 Monate, mit einem 1,000 mAh-Energiespeicher betrieben werden kann.

Vorzugsweise ist die erste Datenübertragungseinrichtung beabstandet von der zweiten Datenübertragungseinrichtung angeordnet, insbesondere so dass kein direkter Kontakt zwischen erster und zweiter Datenübertragungseinrichtung besteht.

In einer bevorzugten Ausgestaltung benötigt das autonome elektronische Preisschild nur zur Aktualisierung der produktbezogenen Daten und der Displayanzeige Strom. Auch ohne Strom sind dann das Display und die zweite Datenübertragungseinrichtung insofern funktionsfähig, als das Informationen durch die zweite Datenübertragungseinrichtung übertragen werden können (die Energie dafür liefert das Strahlungsfeld des auslesenden Geräts), wobei das Display dabei vorzugsweise auch weiterhin (statische) Informationen anzeigt. Dies hat erhebliche Vorteile, insbesondere wenn eine Aktualisierung des Produktpreises nicht täglich, sondern in größeren Zeitabständen erfolgt. Ferner ist es in einer bevorzugten Ausführung denkbar, dass das autonome elektronische Preisschild eine Induktionsspule umfasst, um mit Strom versorgt zu werden. Somit kann zum Zeitpunkt der Aktualisierung eine temporäre Stromversorgung über besagte Induktionsspule erreicht werden.

Vorzugsweise umfasst die erste Datenübertragungseinrichtung ein Funkmodul, insbesondere ein W-LAN-Modul. Mit dem Funkmodul bzw. W-LAN-Modul können aktuelle Preise vom Server abgerufen und/oder empfangen werden. Ferner können ggf. kundenbezogene Informationen versendet werden.

Bei dem erfindungsgemäßen autonomen elektronischen Preisschild stellt die erste Positionserfassungseinrichtung ein GPS-Modul dar. Durch die erste Positionserfassungseinrichtung ist die Position des autonomen elektronischen Preisschilds (Ist-Position) feststellbar. In einer geeigneten Ausgestaltung ist oder umfasst die zweite Datenübertragungseinrichtung gleichzeitig die erste Positionserfassungseinrichtung. Vorzugsweise ist die zweite Datenübertragungseinrichtung, welche auch die erste Positionserfassungseinrichtung umfasst oder darstellt, dann ein Ortungssender, d.h. ein Gerät, welches Daten senden, jedoch nicht empfangen kann, und gleichzeitig die erste Positionserfassung ermöglicht. In einer bevorzugten alternativen Ausführungsform handelt es sich bei der erste Positionserfassungseinrichtung um eine Vorrichtung, welche nicht identisch mit der zweiten Datenübertragungseinrichtung ist. Auch ist es bevorzugt, wenn das Preisschild die Ist-Position in der mindestens einen Speichereinheit speichern kann. Ferner ist es bevorzugt, wenn das Preisschild die Ist-Position mittels der ersten Datenübertragungseinrichtung an den Server und/oder mittels der zweiten Datenübertragungseinrichtung zu dem mobilen Endgerät sendet. Dies ermöglicht es beispielsweise, die Lage des Produktbestands automatisch erfassen zu lassen.

Die mindestens eine Speichereinheit umfasst eine Soll-Position des autonomen elektronischen Preisschilds, wobei das autonome elektronische Preisschild über die erste und/oder zweite Datenübertragungseinheit ein Signal abgibt, wenn das autonome elektronische Preisschild mittels der ersten Positionserfassungseinrichtung feststellt, dass die Ist-Position nicht mit der Soll-Position übereinstimmt. Dies erlaubt es dem Preisschild insbesondere, eine unautorisierte Entfernung von der Soll-Position zu melden. Diese kann vorzugsweise in Form eines Alarmsignals gemeldet werden, welches akustisch oder lautlos sein kann. Insbesondere kann eine Nachricht mittels erster und/oder zweiter Datenübertragungseinrichtung versendet werden.

In einer zweckmäßigen Ausgestaltung erfolgt die Bestimmung der Ist-Position des autonomen elektronischen Preisschilds durch die erste Positionserfassungseinrichtung und/oder durch eine zweite Positionserfassungseinrichtung des mobilen Endgeräts und die erste Positionserfassungseinrichtung, insbesondere durch einen Datenabgleich zwischen der ersten Positionserfassungseinrichtung des autonomen elektronischen Preisschilds und der zweiten Positionserfassungseinrichtung des mobilen Endgeräts. Überraschenderweise hat sich gezeigt, dass die Positionsbestimmung, beispielsweise mittels iBeacon, deutlich verbessert werden kann, indem eine zusätzliche Positionsbestimmung mithilfe der zweiten Positionserfassungseinrichtung eines mobilen Endgeräts erfolgt. Mobile Endgeräte, insbesondere Smartphones, verfügen oftmals über zahlreiche Möglichkeiten, die eine Ortsbestimmung ermöglichen. Beispielhaft seien an dieser Stelle die Funkzellenortung und GPS genannt. Vorzugsweise kann das autonome elektronischen Preisschild über die Signalintensität (ggf. darüber, dass überhaupt ein Signal vorhanden ist), feststellen, wie nahe und wo sich das mobile Endgerät, insbesondere Smartphone, aufhält.

In einer Ausgestaltung umfasst das autonome elektronische Preisschild eine erste Positionserfassungseinrichtung, welche eine erste Ist-Position bestimmt, wobei die Bestimmung der ersten Ist-Position zusätzlich durch eine zweite Positionserfassungseinrichtung des mobilen Endgeräts unterstützt wird, wobei
x) eine erste Ist-Position durch die erste Positionserfassungseinrichtung bestimmt wird,
xx) eine zweite Ist-Position mithilfe der zweiten Positionserfassungseinrichtung des mobilen Endgeräts bestimmt und durch das mobilen Endgerät an das Preisschild und/oder den Server übermittelt wird,
xxx) die erste Ist-Position und die zweite Ist-Position automatisch durch Datenverarbeitungseinrichtungen des Servers oder des Preisschild abgeglichen werden, wobei die erste Ist-Position basierend auf Positionsdaten der zweiten Ist-Position und insbesondere dem Abstand zwischen erster und zweiter Ist-Position, welcher vorzugsweise mittels Signalintensität ermittelt wird, kalibriert und/oder genauer bestimmt wird.

In einer zweckmäßigen Ausgestaltung wird eine erste Ist-Position des Preisschilds mittels einer ersten Positionserfassungseinrichtung in Form einer zweiten Datenübertragungseinrichtung, insbesondere in Form eines Bluetooth-Moduls, beispielsweises eines iBeacon-Moduls, bestimmt, wobei die zweite Datenübertragungseinrichtung mit einem mobilen Endgerät in Kontakt steht. Das mobile Endgerät kann seine eigene Position (zweite Ist-Position) mittels einer zweiten Positionserfassungseinrichtung, insbesondere mittels GPS, vergleichsweise exakt bestimmen. Der Abstand zwischen zweiter Datenübertragungseinrichtung und dem mobilen Endgerät lässt sich über die Signalintensität ermitteln. Nunmehr kann das mobile Endgerät die zweite Ist-Position an das mobile Preisschild übermitteln, wodurch es einer Datenverarbeitungseinrichtung des mobilen Preisschilds möglich ist, die erste Ist-Position zu korrigieren, zu kalibrieren und/oder die Genauigkeit der Bestimmung basierend auf der zweiten Ist-Position zu verbessern.

Vorzugsweise weist das autonome elektronische Preisschild, zumindest während die Darstellung auf dem Display sich nicht verändert und keine Signalübertragung stattfindet, eine Leistungsaufnahme kleiner 50 Milliwatt, vorzugsweise kleiner 20 Milliwatt, insbesondere kleiner 5 Milliwatt und insbesondere bevorzugt kleiner 2 Milliwatt auf.

In einer besonders geeigneten Ausgestaltung weist das Preisschild eine Displayschutzscheibe umfassend Glas und/oder Kunststoff auf. Vorzugsweise ist die Displayschutzscheibe überwiegend durchlässig für sichtbare Strahlung, insbesondere bei Wellenlängen von etwa 380 nm bis 780 nm, und überwiegend strahlungsundurchlässig, insbesondere überwiegend strahlungsreflektierend für Infrarotstrahlung, vorzugsweise für Infrarotstrahlung bei Wellenlängen von 3 bis 50 µm. Das Gehäuse des Preisschilds ist vorzugsweise ebenfalls überwiegend strahlungsreflektierend für Infrarotstrahlung, vorzugsweise für Infrarotstrahlung bei Wellenlängen von 3 bis 50 µm. Überwiegend bedeutet zu mindestens 50%. In vorteilhaften Ausgestaltungen ist die Displayscheibe bzw. das Gehäuse nicht nur zu mindestens 50% strahlungsdurchlässig für sichtbares Licht und/oder strahlungsundurchlässig bzw. strahlungsreilektierend für Infrarotstrahlung, sondern zu mindestens 65%, insbesondere zu mindestens 75%, vorzugsweise zu mindestens 85%, insbesondere bevorzugt zu mindestens 90%. Eine Displayscheibe und/oder ein Gehäuse, welches die vorstehenden Eigenschaften aufweist, ist besonders geeignet, den Umgebungsbedingungen, insbesondere Sonnenlicht, dauerhaft standzuhalten. Ferner werden interne Komponenten, beispielsweise der Energiespeicher, vor einer Wärmeeinwirkung besser geschützt.

In einer weiteren zweckmäßigen Ausgestaltung umfasst das Preisschild mindestens eine Einrichtung zur Energiegewinnung. Die Energie kann aus jeglichen externen, insbesondere natürlichen, Energiequellen (abgesehen von eine unmittelbaren Stromzufuhr) gewonnen werden. Vorzugsweise basiert die mindestens eine Einrichtung zur Energiegewinnung auf Energiequellen wie der Umgebungstemperatur, Luftströmungen, Druck, Vibrationen, Temperaturschwankungen oder Sonnenlicht. Insbesondere bevorzugt sind die Einrichtung zur Energiegewinnung ausgewählt aus einer Gruppe umfassend Solarzellen, piezoelektrische Kristalle, thermoelektrische Generatoren und pyroelektrische Kristalle. In einer geeigneten Ausgestaltung umfasst das Preisschild ein Solarmodul bzw. eine Solarzelle. Die Energiegewinnung ermöglicht es einigen besonderes geeigneten Ausgestaltungen, ohne externe Energieversorgung auszukommen.

Vorzugsweise hat das autonome elektronische Preisschild eine Höhe, eine Breite und eine Länge, wobei Länge > Höhe > Breite gilt und wobei die Länge mindestens 20 cm, insbesondere 40 cm, beträgt. In einer besonders bevorzugten Ausgestaltung ist die Breite kleiner als 15 cm, insbesondere kleiner als 5 cm.

Ferner kann es vorzugsweise vorgesehen sein, dass das Verfahren die folgenden Schritte in dieser Reihenfolge umfasst
i) das Detektieren des Aufenthalts eine Nutzers in der Nähe des autonomen elektronischen Preisschilds, insbesondere mittels eines Bewegungssensors oder einer Kamera, und/oder das Detektieren des Aufenthalts eines mobilen Endgeräts in der Nähe des autonomen elektronischen Preisschilds, insbesondere mittels der zweiten Datenübertragungseinrichtung,
ii) das Senden eines Signals, vorzugsweise mindestens eines kundenbezogenen Datums, an den Server und/oder an ein zweites mobiles Endgerät.

Wenn der Aufenthalt eines mobilen Endgeräts in der Nähe, insbesondere in Sensorreichweite, detektiert wird, kann beispielsweise dem Verkaufspersonal durch Übermittelung eines entsprechenden kundenbezogenen Datums mitgeteilt werden, dass ein Stammkunde eingetroffen ist bzw. ein Stammkunde sich für ein spezifisches Produkt zu interessieren scheint. Hierbei wird angenommen, dass das mobile Endgerät sich bei dem Kunden aufhält. Vorzugsweise ist das mobile Endgerät ein Smartphone, insbesondere des Kunden, so dass diese Annahme ggf. ohne weiteres getroffen werden kann. Vorzugsweise umfasst das mobile Endgerät mindestens ein vom Kunden hinterlegtes kundenbezogenes Datum, beispielsweise eine Kundennummer hinterlegt in einer App des Produktanbieters auf dem mobilen Endgerät. In der Nähe, insbesondere in Sensorreichweite, bedeutet im Sinne der Erfindung weniger als 500 m entfernt, vorzugsweise bedeutet in der Nähe weniger als 50 m, insbesondere bevorzugt weniger als 25 m, ganz besonders bevorzugt weniger als 15 m entfernt von dem Preisschild. In einer besonders geeigneten Ausgestaltung bedeutet in der Nähe benachbart, d.h. weniger als 10 m, insbesondere weniger als 5 m, vorzugsweise weniger als 1 m und insbesondere bevorzugt weniger als 70 cm von dem Preisschild entfernt. Es hat sich als zweckmäßig erwiesen, wenn die Sensorreichweite im Bereich von 0,1 bis 50 m, insbesondere 1 bis 25 m liegt.

In einer weiteren bevorzugten Ausgestaltung umfasst das Verfahren ferner statt oder zusätzlich zu Schritt ii) den Schritt iii), insbesondere im Anschluss an Schritt i) oder Schritt ii)
iii) das Senden eines produktbezogenen Datums an das mobile Endgerät, insbesondere als Teil von Schritt g).

Hierbei löst der Kunde bei seiner Annäherung das Übersenden eines, insbesondere ersten oder zweiten, produktbezogenen Datums an das mobile Endgerät, beispielsweise ein Smartphone des Kunden, aus. Beispielsweise kann dem Kunden bei Annäherung an das Produkt ein Preis und/oder ein Rabatt übermittelt werden. In einer bevorzugten Ausgestaltung werden dem Kunden produktspezifische Daten zur Verfügung gestellt. Ferner kann es zweckmäßig sein, dem Kunden über das mobile Endgerät eine Anfrage, insbesondere ein Verkaufsangebot, zu stellen, welche der Kunde anschließend beantworten kann. Auch kann das produktbezogenen Datum vorzugsweise eine Richtungs- oder Lageinformation umfassen.

In einer weiteren zweckmäßigen Ausführungsform umfasst das Verfahren ferner die folgenden Schritte, insbesondere in dieser Reihenfolge nach dem Schritten d),
1) das Lokalisieren des Nutzers, insbesondere mittels eines Bewegungssensors oder einer Kamera, und/oder das Lokalisieren des mobilen Endgeräts, insbesondere mittels der zweiten Datenübertragungseinrichtung,
2) das Übermitteln einer Auswahl von Produkten mehrerer autonomer elektronischer Preisschilder von dem Server und/oder durch die jeweiligen zweiten Datenübertragungseinrichtungen der autonomen elektronischen Preisschilder an das mobile Endgerät,
3) das Auswählen eines Produkts bzw. des zugehörigen autonomen elektronischen Preisschildes auf dem mobile Endgerät, insbesondere durch einen Kunden, sowie das Senden der Auswahl an den Server und/oder das ausgewählte Preisschild,
4) das Übertragen von Richtungsinformationen an das mobile Endgerät durch den Server und/oder das ausgewählte Preisschild, wobei Schritt 4) insbesondere Teil von Schritt g) ist, wobei die Richtungsinformationen den Kunden vorzugsweise zu dem ausgewählten Preisschild leiten,
5) das Anzeigen der Richtungsinformationen auf einer Anzeigevorrichtung des mobilen Endgeräts.

Hierbei wird dem Kunden die Möglichkeit gegeben, ein Produkt auszuwählen und sich anschließend durch das mobile Endgerät zu dem Produkt führen zu lassen. Dies ist vorteilhaft, da Kunden sich auf diese Weise gezielter innerhalb einer Umgebung mit mehreren Produkte bewegen können. Insbesondere bei Kaufhäusern erleichtert das Verfahren die Orientierung.

Ein autonomes elektronisches Preisschild zur Anwendung des erfindungsgemäßen Verfahrens mit mindestens einem Display zum Anzeigen von mindestens einem produktbezogenen Datum, umfasst in einer Ausgestaltung mindestens einen Energiespeicher, durch den zumindest das Display mit elektrischer Energie versorgbar ist oder versorgt wird, mindestens eine Speichereinheit, auf der zumindest das mindestens eine produktbezogene Datum speicherbar oder gespeichert ist, mindestens eine erste Datenübertragungseinrichtung, die mit einer Servereinheit drahtlos verbunden oder verbindbar ist, und mindestens eine zweite Datenübertragungseinrichtung, die mit einem mobilen Endgerät drahtlos verbunden oder verbindbar ist. Das in dem erfindungsgemäßen Verfahren zum Einsatz kommende Preisschild ist vorzugsweise ein Preisschild, wie es vorstehend beschrieben wurde. Hierbei ist es bevorzugt, wenn das Display und/oder zweite Datenübertragungseinrichtung des autonomen elektronischen Preisschilds im Betrieb zumindest zeitweise keinen Strom verbrauchen.

Ferner kann ein Fahrzeug, insbesondere Auto, mit dem erfindungsgemäßen elektronischen Preisschild, wie es vorstehend beschrieben wurde, ausgestattet sein. In diesem Fall stellt das Produkt das Fahrzeug dar. Ein erheblicher Vorteil ist dabei, dass der Kunde produktbezogene Daten über ein erstes mobiles Endgerät auch während einer Probefahrt abrufen kann, indem er diese über die zweite Datenübertragungseinrichtung des Preisschilds bezieht.

Ferner kann das Preisschild eine Logistik-Supply-Chain-Funktion aufweisen. Hierbei umfasst ein Datenspeicher des Preisschilds Informationen über den gegenwärtigen Aufenthaltsort (Ist-Position), mindestens einen angestrebten Aufenthaltsort (mindestens eine Soll-Position), beispielsweise den Ort an welchem der nächste Montageschritt erfolgt, und/oder Informationen über Produktionsschritte, welche noch erfolgen sollen. Vorzugsweise zeigt das Preisschild in einem ersten Verfahrensschritt (Produktionsstadium) nicht den Preis, sondern andere produktionstechnische Informationen (z.B. eine Soll-Position und/oder der nächster Montageschritt) an und übernimmt in einem zweiten Verfahrensschritt (Verkaufsstadium) die Funktion eines Preisschilds, insbesondere gemäß mindestens einem der vorstehenden Verfahren. Somit wird ein Logistikschild in ein Preisschild umgewandelt.

Die Erfindung betrifft ferner die Verwendung des vorstehend beschriebenen Verfahrens, elektronischen Preisschilds oder Fahrzeugs in Verkaufs- und Vertriebseinrichtungen für Fahrzeuge, insbesondere in Autokaufhäusern.

Mit dem erfindungsgemäßen Verfahren und dem zugehörigen autonomen elektronischen Preisschild ist es möglich, einerseits den auf dem Display angezeigten Preis immer tagesaktuell zu halten und andererseits von dem Preisschild Daten an ein mobiles Endgerät zu übertragen. Dies kann beispielsweise der Produktpreis, ein Sondernagebot oder die Position des Produktes sein. Das elektronische Preisschild ist autonom, so dass es weitgehend unabhängig von der lokalen Infrastruktur eingesetzt werden kann. Vorzugsweise ist es dabei technisch dazu ausgelegt und eingerichtet, längere Zeit ohne eine externe Energiezufuhr auszukommen. Auch kann es vorgesehen sein, dass das Preisschild nicht nur Informationen sendet, sondern auch Informationen über den Kunden sammelt. Dies ermöglicht ein zielgerichtetes Bedienen/Beraten des Kunden durch Servicepersonal. Insbesondere ist die Kommunikationsstruktur zu dem Server, Produkt und dem mobilen Endgerät auch dazu ausgelegt ein hohes Maß an Sicherheit, beispielsweise vor Diebstahl oder Datenmanipulation, zu bieten.

Ein Fahrzeug kann auch mit einem autonomen elektronischen Preisschild, wie es vorstehend beschrieben wird, drahtlos oder drahtgebunden verbindbar und/oder verbunden sein.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: eine schematische, perspektivische Ansicht der Vorderseite des autonomen elektronischen Preisschilds;
- Figur 2: eine schematische, perspektivische Ansicht der Rückseite des autonomen elektronischen Preisschilds;
- Figur 3: eine schematische Ansicht des Inneren Aufbaus des autonomen elektronischen Preisschilds; und
- Figur 4: ein Schema einer Kommunikationsanordnung mit dem autonomen elektronischen Preisschild.

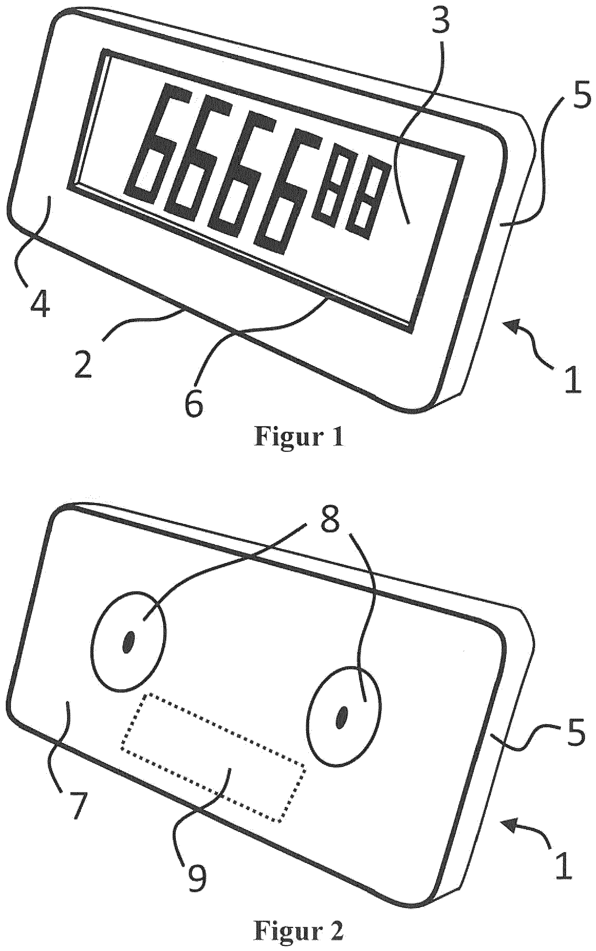

Figur 1 zeigt die Vorderseite einer Ausführungsform des autonomen elektronischen Preisschilds 1 mit einem Display 3 auf welchem der Produktpreis von 6666,88 EUR zu sehen ist (die Währung ist nicht wiedergegeben). Das Display hat einen Rand 6 und ist gegenüber der Vorderseite 4 des autonomen elektronischen Preisschilds etwas versetzt. Das autonome elektronische Preisschild hat einen umlaufenden Rand 2 mit abgerundeten Ecken. An den Rand 2 schließt sich die umlaufende Seitenwand 5 des autonomen elektronischen Preisschilds an.

Figur 2 zeigt die Rückseite einer Ausführungsform des autonomen elektronischen Preisschilds 1 mit Befestigungsmitteln 8. Vorliegend werden zwei Saugnäpfe verwendet, wobei andere Befestigungsmittel 8 ebenso denkbar sind. Auch ist es denkbar auf Befestigungsmittel 8 zu verzichten oder ein Aufstellgerüst zu verwenden. Ferner zeigt Figur 2 der Deckel 9 für ein Batteriefach. Die Seitenwand 5 des autonomen elektronischen Preisschilds ist ebenfalls wiedergegeben.

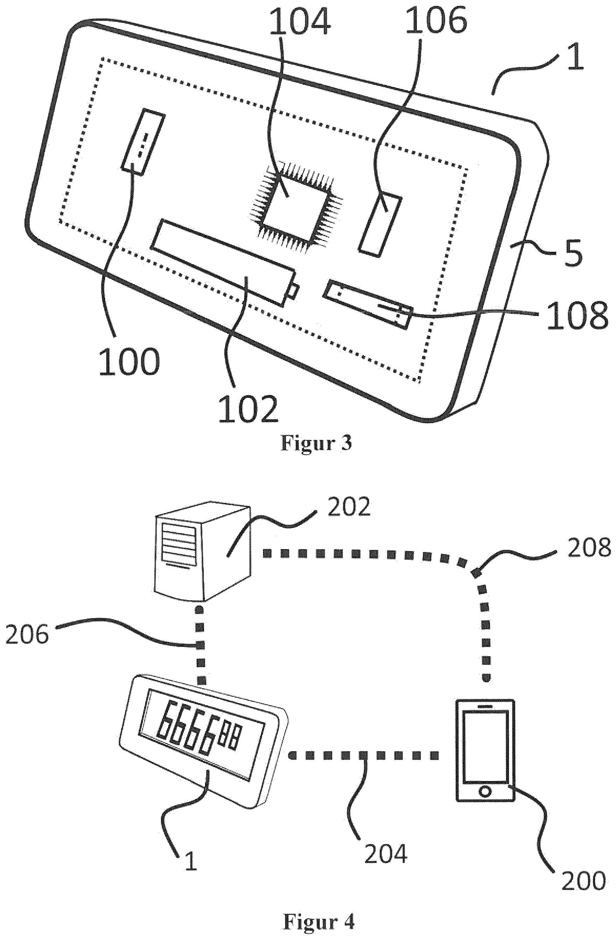

Figur 3 zeigt die wesentlichen Komponenten des autonomen elektronischen Preisschilds. Es ist eine erste Datenübertragungsvorrichtung 106 und eine zweite Datenübertragungsvorrichtung 100 wiedergegeben, welche auch eine erste Positionserfassungseinrichtung umfasst. Der Energiespeicher umfasst vorliegend eine Batterie 102. Die Speichereinheit 108 für Daten ist benachbart zur ersten Datenübertragungsvorrichtung 106 angeordnet. Ebenfalls benachbart ist eine Datenverarbeitungseinheit 104 angeordnet.

Figur 4 zeigt beispielhaft die Kommunikationsanordnung des autonomen elektronischen Preisschilds mit einem mobilen Endgerät, insbesondere Smartphone 200, sowie dem Server 202. Die erste Datenübertragungseinheit des autonomen elektronischen Preisschilds 1 empfängt ein erstes und/oder zweites Datum von dem Server 202 über den Kommunikationsweg 206. Die zweite Datenübertragungseinheit des autonomen elektronischen Preisschilds 1 sendet das erste und/oder zweite Datum an das Smartphone 200 über den Kommunikationsweg 204. Es ist auch denkbar, dass das Smartphone 200 zusätzlich direkt mit dem Server 202 über den Kommunikationsweg 208 in Verbindung steht.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren, umfassend die nachfolgenden Schritte, insbesondere in dieser Reihenfolge,
b) das drahtlose Bereitstellen von mindestens einem ersten und/oder zweiten produktbezogenen Datum, insbesondere einschließlich eines aktuellen Produktpreises, insbesondere durch einen Server,
c) das Empfangen und Speichern des mindestens einen ersten und/oder zweiten produktbezogenen Datums durch ein autonomes elektronisches Preisschild, wobei dieses eine erste Datenübertragungseinrichtung zum Empfangen des mindestens einen ersten und/oder zweiten produktbezogenen Datums und mindestens eine Speichereinheit zum Speichern des mindestens einen ersten und/oder zweiten produktbezogenen Datums aufweist,
d) das Anzeigen des mindestens einen ersten und/oder zweiten produktbezogenen Datums durch das autonome elektronische Preisschild, wobei das autonome elektronische Preisschild ein Display zum Anzeigen des mindestens einen produktbezogenen Datums und mindestens einen Energiespeicher, welcher das Display mit Energie versorgt, aufweist,
g) das Senden des mindestens einen ersten und/oder zweiten produktbezogenen Datums zu einem mobilen Endgerät, insbesondere Smartphone, wobei das autonome elektronische Preisschild eine zweite Datenübertragungseinrichtung zum Senden des besagten mindestens einen ersten und/oder zweiten produktbezogenen Datums aufweist,
**dadurch gekennzeichnet, dass** das autonome elektronische Preisschild eine erste Positionserfassungseinrichtung umfasst, durch welche die erste Ist-Position des autonomen elektronischen Preisschilds feststellbar ist,
wobei die mindestens eine Speichereinheit eine Soll-Position des autonomen elektronischen Preisschilds umfasst, wobei das autonome elektronische Preisschild über die erste und/oder zweite Datenübertragungseinheit ein Signal abgibt, wenn das autonome elektronische Preisschild, insbesondere eine Datenverarbeitungseinrichtung des autonomen elektronischen Preisschilds, mittels der ersten Positionserfassungseinrichtung feststellt, dass die erste Ist-Position nicht mit der Soll-Position übereinstimmt,
wobei die erste Positionserfassungseinrichtung ein GPS-Modul ist.

2. Verfahren nach Anspruch 1, ferner umfassend die folgenden Schritte, insbesondere in dieser Reihenfolge,
a) ggf. das, insbesondere regelmäßige, Abrufen und/oder Berechnen eines ersten produktbezogenen Datums, insbesondere eines aktuellen Produktpreises, durch den Server.
e) das Senden eines kundenbezogenen Datums von dem mobilen Endgerät zu dem autonomen elektronischen Preisschild, sowie das Empfangen des kundenbezogenen Datums, insbesondere durch die zweite Datenübertragungseinrichtung,
f) das Auswerten des kundenbezogenen Datums durch eine Datenverarbeitungseinrichtung des autonomen elektronischen Preisschilds,
und wobei in Schritt g), ob und/oder welches mindestens eine erste und/oder mindestens eine zweite produktbezogene Datum gesendet wird, von der Auswertung des kundenbezogenen Datums abhängt.

3. Verfahren nach einem der vorstehenden Ansprüche, **dadurch gekennzeichnet, dass**
in Schritt d) das erste produktbezogene Datum übertragen wird und in Schritt g) das zweite produktbezogene Datum und/oder dass in Schritt d) und g) jeweils das erste produktbezogene Datum übertragen wird.

4. Verfahren nach einem der vorstehenden Ansprüche, **dadurch gekennzeichnet, dass**
das Display eine nichtleuchtende Anzeige umfasst oder darstellt,
und/oder dass die Darstellung durch das Anlegen einer Spannung verändert werden kann und anschließend für mindestens 48 h, insbesondere 200 h, stabil bleibt.

5. Verfahren nach einem der vorstehenden Ansprüche, **dadurch gekennzeichnet, dass**
das autonome elektronische Preisschild, insbesondere drahtlos, mit einem Produkt und/oder einem dem Produkt zuordneten Alarmsystem in Verbindung steht, wobei ein Alarmsignal versendet, insbesondere ausgelöst, wird, wenn die Verbindung abbricht,
und/oder dass das autonome elektronische Preisschild drahtlos mit einem Produkt und/oder einem dem Produkt zuordneten Alarmsystem periodisch und/oder zu festgelegten Zeitpunkten Kontakt aufnimmt oder von diesem kontaktiert wird, insbesondere drahtlos, wobei ein Alarmsignal versendet, insbesondere ausgelöst, wird, wenn mindestens eine Kontaktaufnahme fehlschlägt.

6. Verfahren nach einem der vorstehenden Ansprüche, **dadurch gekennzeichnet, dass**
die zweite Datenübertragungseinrichtung einen aktiven oder passiven RFID-Transponder oder ein Bluetooth-Modul, insbesondere ein iBeacon-Modul, umfasst
und/oder dass die zweite Datenübertragungseinrichtung einen Sender umfasst, der, insbesondere in festen Zeitabständen und vorzugsweise alle 50 bis 1000 ms, Signale versendet, wobei die zweite Datenübertragungseinrichtung vorzugsweise nicht dafür ausgelegt und eingerichtet ist Daten zu empfangen.

7. Verfahren nach einem der vorstehenden Ansprüche, **dadurch gekennzeichnet, dass**
die zweite Datenübertragungseinrichtung die erste Positionserfassungseinrichtung umfasst oder darstellt.

8. Verfahren nach Anspruch 7, **dadurch gekennzeichnet, dass**
das autonome elektronische Preisschild dem Server seine erste Ist-Position, insbesondere mittels der ersten Datenübertragungseinheit, übermittelt.

9. Verfahren nach einem der vorstehenden Ansprüche, **dadurch gekennzeichnet, dass**
eine zweite Ist-Position des mobilen Endgeräts mittels einer zweiten Positionserfassungseinrichtung bestimmt wird, wobei die zweite Ist-Position zur genaueren Bestimmung, Korrektur und/oder Kalibrierung der ersten Ist-Position genutzt wird.

10. Verfahren nach Anspruch 9, **dadurch gekennzeichnet, dass**
x) die erste Ist-Position durch die erste Positionserfassungseinrichtung bestimmt wird,
xx) die zweite Ist-Position mithilfe der zweiten Positionserfassungseinrichtung des mobilen Endgeräts bestimmt und durch das mobilen Endgerät an das Preisschild und/oder den Server übermittelt wird,
xxx) die erste Ist-Position und die zweite Ist-Position automatisch durch Datenverarbeitungseinrichtungen des Servers oder des Preisschild abgeglichen werden, wobei die erste Ist-Position basierend auf Positionsdaten der zweiten Ist-Position und insbesondere dem Abstand zwischen erster und zweiter Ist-Position, welcher vorzugsweise mittels Signalintensität ermittelt wird, kalibriert und/oder genauer bestimmt wird.

11. Verfahren nach einem der vorstehenden Ansprüche, **dadurch gekennzeichnet, dass**
das Verfahren ferner die folgenden Schritte in dieser Reihenfolge umfasst
i) das Detektieren des Aufenthalts eine Nutzers in der Nähe des autonomen elektronischen Preisschilds, insbesondere mittels eines Bewegungssensors oder einer Kamera, und/oder das Detektieren des Aufenthalts eines mobilen Endgeräts in der Nähe des autonomen elektronischen Preisschilds, insbesondere mittels der zweiten Datenübertragungseinrichtung,
ii) das Senden eines Signals, vorzugsweise eines kundenbezogenen Datums, an den Server.

12. Verfahren nach einem der vorstehenden Ansprüche, **dadurch gekennzeichnet, dass**
das Verfahren ferner die folgenden Schritte in dieser Reihenfolge umfasst
i) das Detektieren des Aufenthalts eine Nutzers in der Nähe des autonomen elektronischen Preisschilds, insbesondere mittels eines Bewegungssensors oder einer Kamera, und/oder das Detektieren des Aufenthalts eines mobilen Endgeräts in der Nähe des autonomen elektronischen Preisschilds, insbesondere mittels der zweiten Datenübertragungseinrichtung,
iii) das Senden eines produktbezogenen Datums an das mobile Endgerät, insbesondere als Teil von Schritt g).

13. Verfahren nach einem der vorstehenden Ansprüche, **dadurch gekennzeichnet, dass**
das Verfahren ferner die folgenden Schritte, insbesondere in dieser Reihenfolge nach dem Schritt d), umfasst
1) das Lokalisieren des Nutzers, insbesondere mittels eines Bewegungssensors oder einer Kamera, und/oder das Lokalisieren des mobilen Endgeräts, insbesondere mittels der zweiten Daten Übertragungseinrichtung,
2) das Übermitteln einer Auswahl von Produkten mehrerer autonomer elektronischer Preisschilder von dem Server und/oder durch die jeweiligen zweiten Daten Übertragungseinrichtungen der autonomen elektronischen Preisschilder an das mobile Endgerät,
3) das Auswählen eines Produkts bzw. des zugehörigen autonomen elektronischen Preisschildes auf dem mobile Endgerät, insbesondere durch einen Kunden, sowie das Senden der Auswahl an den Server und/oder das ausgewählte Preisschild,
4) das Übertragen von Richtungsinformationen an das mobile Endgerät durch den Server und/oder das ausgewählte Preisschild, wobei die Richtungsinformationen den Nutzer zu dem ausgewählten Preisschild leiten, wobei Schritt 4) insbesondere Teil von Schritt g) ist,
5) das Anzeigen der Richtungsinformationen auf einer Anzeigevorrichtung des mobilen Endgeräts.

14. Verwendung des Verfahrens nach einem der vorangehenden Ansprüche in Verkaufs- und Vertriebseinrichtungen für Fahrzeuge.

## Claims

1. A method, comprising the following steps, in particular in this order,
b) wirelessly providing at least one first and/or second product-related datum, in particular including a current product price, in particular by a server,
c) receiving and storing the at least one first and/or second product-related datum by an autonomous electronic price label, wherein said autonomous electronic price label has a first data transmission device for receiving the at least one first and/or second product-related datum and at least one storage unit for storing the at least one first and/or second product-related datum,
d) displaying the at least one first and/or second product-related datum by the autonomous electronic price label, wherein the autonomous electronic price label has a display for displaying the at least one product-related datum and at least one energy store which supplies the display with energy,
g) sending the at least one first and/or second product-related datum to a mobile terminal device, in particular a smartphone, wherein the autonomous electronic price label has a second data transmission device for sending said at least one first and/or second product-related datum,
**characterised in that** the autonomous electronic price label comprises a first position detecting device, by means of which the first actual position of the autonomous electronic price label is ascertainable.
wherein the at least one storage unit comprises a nominal position of the autonomous electronic price label, wherein the autonomous electronic price label emits a signal via the first and/or second data transmission unit if the autonomous electronic price label, in particular a data processing device of the autonomous electronic price label, ascertains via the first position detecting device that the first actual position does not correspond to the nominal position,
wherein the first position detecting device is a GPS module.

2. The method according to Claim 1, further comprising the following steps, in particular in this order,
if necessary, in particular regularly, calling up and/or calculating a first product-related datum, in particular a current product price, by the server.
e) sending a customer-related datum from the mobile terminal device to the autonomous electronic price label, as well as receiving the customer-related datum, in particular by the second data transmission device,
f) evaluating the customer-related datum by a data processing device of the autonomous electronic price label,
and wherein, in step g), whether and/or which at least one first and/or at least one second product-related datum is sent depends on the evaluation of the customer-related datum.

3. The method according to any one of the preceding claims, **characterised in that**
the first product-related datum is transmitted in step d) and the second product-related datum is transmitted in step g) and/or **in that**, in step d) and g), the first product-related datum is transmitted in each case.

4. The method according to any one of the preceding claims, **characterised in that**
the display comprises or represents a non-luminous display,
and/or **in that** the representation can be modified by applying a voltage and subsequently remains stable for at least 48 h, in particular 200 h.

5. The method according to any one of the preceding claims, **characterised in that** the autonomous electronic price label is connected, in particular wirelessly, to a product and/or an alarm system assigned to the product, wherein an alarm signal is sent, in particular triggered, if the connection is broken,
and/or **in that** the autonomous electronic price label wirelessly establishes contact with a product and/or an alarm system assigned to the product periodically and/or at fixed times, or is contacted by the latter, in particular wirelessly, wherein an alarm signal is sent, in particular triggered, if at least one contacting fails.

6. The method according to any one of the preceding claims, **characterised in that**
the second data transmission device comprises an active or passive RFID transponder or a Bluetooth module, in particular an iBeacon module,
and/or **in that** the second data transmission device comprises a sender which sends signals, in particular at fixed intervals and preferably every 50 to 1000 ms, wherein the second data transmission device is preferably not designed for this and is configured to receive data.

7. The method according to any one of the preceding claims, **characterised in that**
the second data transmission device comprises or represents the first position detecting device.

8. The method according to Claim 7, **characterised in that**
the autonomous electronic price label transfers its first actual position, in particular via the first data transmission unit, to the server.

9. The method according to any one of the preceding claims, **characterised in that**
a second actual position of the mobile terminal device is determined via a second position detecting device, wherein the second actual position is used to more accurately determine, correct and/or calibrate the first actual position.

10. The method according to Claim 9, **characterised in that**
x) the first actual position is determined by the first position detecting device,
xx) the second actual position is determined with the aid of the second position detecting device of the mobile terminal device and is transferred by the mobile terminal device to the price label and/or the server,
xxx) the first actual position and the second actual position are compared automatically by data processing devices of the server or of the price label, wherein the first actual position is established based on position data of the second actual position and, in particular, the distance between the first and the second actual position, which is preferably established, calibrated and/or more precisely determined via the signal intensity.

11. The method according to any one of the preceding claims, **characterised in that**
the method further comprises the following steps in this order
i) detecting the presence of a user in the vicinity of the autonomous electronic price label, in particular via a movement sensor or a camera, and/or detecting the presence of a mobile terminal device in the vicinity of the autonomous electronic price label, in particular via the second data transmission device,
ii) sending a signal, preferably a customer-related datum, to the server.

12. The method according to any one of the preceding claims, **characterised in that**
the method further comprises the following steps in this order
i) detecting the presence of a user in the vicinity of the autonomous electronic price label, in particular via a movement sensor or a camera, and/or detecting the presence of a mobile terminal device in the vicinity of the autonomous electronic price label, in particular via the second data transmission device,
iii) sending a product-related datum to the mobile terminal device, in particular as part of step g).

13. The method according to any one of the preceding claims, **characterised in that**
the method further comprises the following steps, in particular in this order following step d),
1) locating the user, in particular via a movement sensor or a camera, and/or locating the mobile terminal device, in particular via the second data transmission device,
2) transmitting a selection of products of multiple autonomous electronic price labels from the server and/or by the respective second data transmission devices of the autonomous electronic price labels to the mobile terminal device,
3) selecting a product or the associated autonomous electronic price label on the mobile terminal device, in particular by a customer, as well as sending the selection to the server and/or the selected price label,
4) transferring direction information to the mobile terminal device by the server and/or the selected price label, wherein the direction information directs the user to the selected price label, wherein step 4) is in particular part of step g),
5) displaying the direction information on a display apparatus of the mobile terminal device.

14. A use of the method according to any one of the preceding claims in sales and marketing facilities for vehicles.

## Revendications

1. Procédé comprenant les étapes suivantes, en particulier dans cet ordre,
b) la mise à disposition sans fil, en particulier par un serveur, d'au moins une première et/ou une seconde donnée relative à un produit, en particulier y compris un prix actuel du produit,
c) la réception et l'enregistrement de l'au moins une première et/ou seconde donnée relative au produit par une étiquette de prix électronique autonome, celle-ci comportant un premier dispositif de transmission de données destiné à recevoir l'au moins une première et/ou seconde donnée relative au produit et au moins une unité d'enregistrement destinée à enregistrer l'au moins une première et/ou seconde donnée relative au produit,
d) l'affichage de l'au moins une première et/ou seconde donnée relative au produit par l'étiquette de prix électronique autonome, l'étiquette de prix électronique autonome comportant un dispositif de visualisation destiné à afficher l'au moins une donnée relative au produit et au moins un réservoir d'énergie, qui alimente le dispositif de visualisation en énergie,
g) l'envoi de l'au moins une première et/ou seconde donnée relative au produit à un terminal mobile, en particulier un smartphone, l'étiquette de prix électronique autonome comportant un second dispositif de transmission de données destiné à envoyer ladite au moins une première et/ou seconde donnée relative au produit,
**caractérisé en ce que** l'étiquette de prix électronique autonome comprend un premier dispositif de détection de position, par lequel la première position réelle de l'étiquette de prix électronique autonome peut être déterminée,
l'au moins une unité d'enregistrement comprenant une position de consigne de l'étiquette de prix électronique autonome, l'étiquette de prix électronique autonome produisant un signal par l'intermédiaire de la première et/ou seconde unité de transmission de données quand l'étiquette électronique autonome, en particulier un dispositif de traitement de données de l'étiquette électronique autonome, détermine, au moyen du premier dispositif de détection de position, que la première position réelle ne correspond pas à la position de consigne,
le premier dispositif de détection de position étant un module GPS.

2. Procédé selon la revendication 1, comprenant en outre les étapes suivantes, en particulier dans cet ordre,
a) le cas échéant, l'appel et/ou le calcul, en particulier réguliers, d'une première donnée relative au produit, en particulier d'un prix actuel du produit, par le serveur,
e) l'envoi à l'étiquette électronique autonome d'une donnée relative à un client à partir du terminal mobile, ainsi que la réception de la donnée relative au client, en particulier par le second dispositif de transmission de données,
f) l'évaluation de la donnée relative au client par un dispositif de traitement de données de l'étiquette de prix électronique autonome,
et dans l'étape g), l'évaluation de la donnée relative au client déterminant l'envoi ou non d'au moins une première et/ou au moins une seconde donnée relative au produit et/ou quelle au moins une première et/ou au moins une seconde donnée relative au produit est envoyée.

3. Procédé selon l'une quelconque des revendications précédentes, **caractérisé en ce que**
dans l'étape d) la première donnée relative au produit est transmise et dans l'étape g) la seconde donnée relative au produit et/ou **en ce que** dans l'étape d) et g) la première donnée relative au produit est respectivement transmise.

4. Procédé selon l'une quelconque des revendications précédentes, **caractérisé en ce que**
le dispositif de visualisation comprend ou représente un dispositif de visualisation non lumineux,
et/ou **en ce que** la représentation peut être modifiée par l'application d'une tension et reste ensuite stable pendant au moins 48 h, en particulier 200 h.

5. Procédé selon l'une quelconque des revendications précédentes, **caractérisé en ce que**
l'étiquette de prix électronique autonome est en liaison, en particulier sans fil, avec un produit et/ou un système d'alarme associé au produit, un signal d'alarme étant envoyé, en particulier déclenché, quand la liaison s'interrompt,
et/ou **en ce que** l'étiquette de prix électronique autonome prend contact, sans fil, périodiquement et/ou à des moments définis avec un produit et/ou un système d'alarme associé au produit ou est contacté par celui-ci, en particulier sans fil ; un signal d'alarme étant envoyé, en particulier déclenché, quand au moins une prise de contact échoue.

6. Procédé selon l'une quelconque des revendications précédentes, **caractérisé en ce que**
le second dispositif de transmission de données comprend un transpondeur RFID actif ou passif ou un module Bluetooth, en particulier un module iBeacon et/ou **en ce que** le second dispositif de transmission de données comprend un émetteur qui envoie des signaux, en particulier à intervalles définis et de préférence toutes les 50 à 1000 ms, le second dispositif de transmission de données n'étant de préférence pas conçu et configuré pour recevoir des données.

7. Procédé selon l'une quelconque des revendications précédentes, **caractérisé en ce que**
le second dispositif de transmission de données comprend ou représente le premier dispositif de détection de position.

8. Procédé selon la revendication 7, **caractérisé en ce que**
l'étiquette de prix électronique autonome transfère au serveur sa première position réelle, en particulier au moyen de la première unité de transmission de données.

9. Procédé selon l'une quelconque des revendications précédentes, **caractérisé en ce que** une seconde position réelle du terminal mobile est déterminée au moyen d'un second dispositif de détection de position, la seconde position réelle étant utilisée pour une détermination plus précise, une correction et/ou un calibrage de la première position réelle.

10. Procédé selon la revendication 9, **caractérisé en ce que**
x) la première position réelle est déterminée par le premier dispositif de détection de position,
xx) la seconde position réelle est déterminée à l'aide du second dispositif de détection de position du terminal mobile et est transféré par le terminal mobile à l'étiquette de prix et/ou au serveur,
xxx) la première position réelle et la seconde position réelle sont comparées automatiquement par des dispositifs de traitement de données du serveur ou de l'étiquette de prix, la première position réelle étant calibrée et/ou déterminée plus précisément sur la base de données de position de la seconde position réelle et en particulier de l'écart entre la première et la seconde position réelle, qui est de préférence déterminé au moyen de l'intensité de signal.

11. Procédé selon l'une quelconque des revendications précédentes, **caractérisé en ce que**
le procédé comprend en outre les étapes suivantes dans cet ordre
i) la détection de la présence d'un utilisateur à proximité de l'étiquette de prix électronique autonome, en particulier au moyen d'un détecteur de mouvement ou d'une caméra, et/ou la détection de la présence d'un terminal mobile à proximité de l'étiquette de prix électronique autonome, en particulier au moyen du second dispositif de transmission de données,
ii) l'envoi d'un signal, de préférence d'une donnée relative au client, au serveur.

12. Procédé selon l'une quelconque des revendications précédentes, **caractérisé en ce que**
le procédé comprend en outre les étapes suivantes dans cet ordre
i) la détection de la présence d'un utilisateur à proximité de l'étiquette de prix électronique autonome, en particulier au moyen d'un détecteur de mouvement ou d'une caméra, et/ou la détection de la présence d'un terminal mobile à proximité de l'étiquette de prix électronique autonome, en particulier au moyen du second dispositif de transmission de données,
iii) l'envoi d'une donnée relative au produit au terminal mobile, en particulier dans le cadre de l'étape g).

13. Procédé selon l'une quelconque des revendications précédentes, **caractérisé en ce que**
le procédé comprend en outre les étapes suivantes, en particulier dans cet ordre après l'étape d),
1) la localisation de l'utilisateur, en particulier au moyen d'un détecteur de mouvement ou d'une caméra, et/ou la localisation du terminal mobile, en particulier au moyen du second dispositif de transmission de données,
2) le transfert au terminal mobile d'une sélection de produits de plusieurs étiquettes de prix autonomes électroniques par le serveur et/ou par les seconds dispositifs de transmission de données respectifs des étiquettes de prix autonomes électroniques,
3) la sélection, sur le terminal mobile, d'un produit ou de l'étiquette de prix électronique autonome associée, en particulier par un client, ainsi que l'envoi de la sélection au serveur et/ou à l'étiquette de prix sélectionnée,
4) la transmission d'informations de direction au terminal mobile par le serveur et/ou l'étiquette de prix sélectionnée, les informations de direction guidant l'utilisateur jusqu'à l'étiquette de prix sélectionnée, l'étape 4) faisant en particulier partie de l'étape g),
5) l'affichage des informations de direction sur un appareil d'affichage du terminal mobile.

14. Utilisation du procédé selon l'une quelconque des revendications précédentes dans des établissements de vente et de distribution pour véhicules.
